# EUROPÄISCHE PATENTSCHRIFT

(11) **EP 0 489 316 B1**
(45) Veröffentlichungstag und Bekanntmachung des Hinweises auf die Patenterteilung: **19.01.1994**
(21) Anmeldenummer: 91119939.6
(22) Anmeldetag: 23.11.1991
(51) Int. Cl.: B60Q 1/48

(54) **Stellantrieb zum Einbau in eine Karosserie eines Kraftfahrzeugs**
Control device incorporated in the body of a vehicle
Dispositif de commande incorporé à la carosserie d'un véhicle

(30) Priorität: 04.12.1990 DE 4038550
(43) Veröffentlichungstag der Anmeldung: 10.06.1992
(73) Patentinhaber: MERCEDES-BENZ AG, 70327 Stuttgart (DE); Walter Alfmeier GmbH + Co Präzisions-Baugruppenelemente, D-91757 Treuchtlingen (DE)
(72) Erfinder: Feichtiger, Dieter, Dipl.-Ing., W-7042 Aidlingen 1 (DE); Schumacher, Josef, Dipl.-Ing., W-7410 Reutlingen 26 (DE); Reis, Tobias, Dipl.-Ing., W-7277 Wildberg (DE); Heimbrodt, Klaus-Jürgen, Dipl.-Ing., W-8830 Treuchtlingen (DE); Klink, Georg, W-8830 Treuchtlingen (DE)

(56) Entgegenhaltungen:
- DE-A- 1 755 279
- DE-A- 3 738 688

## Beschreibung

Die Erfindung bezieht sich auf einen Stellantrieb zum Einbau in eine Karosserie eines Kraftfahrzeugs mit den Merkmalen des Oberbegriffs des Patentanspruchs 1. Ein Stellantrieb mit diesen Merkmalen ist bekannt (DE-C-3 814 009).

Zwar ist in der genannten Druckschrift die Einbaulage des Stellantriebs, dessen Stellglied unmittelbar als Peilstab zur visuellen Orientierungshilfe beim Einparken und ähnlichen Fahrsituationen dient, im Verhältnis zu einer Karosseriewand bzw. -öffnung skizziert, jedoch ist nichts über die genaue Befestigung des Stellantriebgehäuses an der Fahrzeugkarosserie ausgesagt, insbesondere nicht darüber, wie das freie Ende des Stellglieds gegenüber dem Rand der von ihm durchdrungenen Öffnung der Karosserie ausgefluchtet werden kann.
Es ist lediglich implizit vorauszusetzen, daß der Stellantrieb eine Halterung für sein Gehäuse aufweist.

Auch einer anderen einschlägigen Druckschrift (DE-A-3 042 801) kann keine Vorrichtung zur Ausfluchtung des freien Endes des Stellglieds bei der Montage in die Karosserie entnommen werden. Dort ist lediglich eine starre Halterung des Antriebs an einem karosseriefesten Träger dargestellt. Das freie Ende des Stellglieds ist mit einem radial auskragenden Kopf versehen, der beim Einfahren gegen eingesenkte Ränder einer Karosserieöffnung gezogen wird. Damit ist seine Ruhelage exakt bestimmt.

In der AT-A-213 253 wird eine Einparkhilfe für Kraftfahrzeuge beschrieben, die einen nach rückwärts aus einer Karosserie ausfahrbaren Taster aufweist. Dieser wird durch eine mechanische Rastung in seiner eingefahrenen Ruhelage gehalten, welche durch den stellantrieb des Tasters zu dessen Ausfahren überwunden werden muß.

Es ist eine Justiereinrichtung für einen elektrischen Schalter bekannt (Bremslichtschalter HONDA CB 400 N), die eine mit einem Außengewinde versehene Aufnahmehülse für den Schalter in einer festen Halterung über eine Einstellmutter abstützt. Der Schaltpunkt des Schalters kann durch Verdrehen der Einstellmutter gegenüber der verdrehsicher in der Halterung geführten Aufnahmehülse stufenlos eingestellt werden.

Die Erfindung hat die Aufgabe, einen Stellantrieb mit den Merkmalen des Oberbegriffs des Patentanspruchs 1 mit einer insbesondere für beengte Einbauverhältnisse geeigneten und zum Ausgleich von toleranzbedingten Maßabweichungen der Karosserie einfach handhabbaren Befestigungsmöglichkeit zu versehen.

Diese Aufgabe wird mit den kennzeichnenden Merkmalen des Patentanspruchs 1 erfindungsgemäß gelöst.

Mit einer Spanneinrichtung kann das Gehäuse des Stellantriebs zwischen der Halterung und einer (oberen) Abdeckung des Innenraums des Karosserie-Bauteils verspannt werden, wobei das Gehäuse in der von dem Stellglied durchdrungenen Karosserie-Öffnung zentriert wird.
Der verlangte einfache Einbau des gesamten Stellantriebs in einen äußerst beengten Karosserieraum, insbesondere in einen Kotflügel-Hohlraum, wird dadurch erreicht, daß der Stellantrieb mitsamt seiner Halterung - in die er einfach eingeclipst werden kann - in den engen Einbauraum hineingeführt wird, worauf zunächst die Halterung an der Karosserie befestigt und dann der Stellantrieb mittels der Spanneinrichtung gegen die Öffnung der Karosserie verspannt wird.

Eine solche Anordnung ist nicht nur auf eine Verwendung des Stellglieds des Stellantriebs als ausfahrbare Orientierungshilfe beschränkt, sondern kann auch z. B. im Zusammenhang mit einer Tankklappenverriegelung - bei der bekanntlich das Stellglied eines Zentralverriegelungsstellelements unmittelbar als Riegel durch eine Lasche der Tankklappe führbar ist (DE 35 04 466 C1) - verwendet werden.

Die kennzeichnenden Merkmale der unteransprüche offenbaren vorteilhafte Weiterbildungen des erfindungsgemäßen Stellantriebs.

Speziell im Hinblick auf einen Einsatz des Stellantriebs im Umfang einer Orientierungshilfe kann mit einer Justiereinrichtung zunächst der Rand der Austrittsöffnung des Gehäuses des Stellantriebs vor dem Einbau des Stellantriebs in die Fahrzeugkarosserie mit dem freien Ende des Stellglieds ausgefluchtet werden bzw. kann nach beendeter Montage das freie Ende des Stellglieds exakt mit der entsprechenden Öffnung im Karosserie-Bauteil ausgefluchtet werden, um in einfacher und montagefreundlicher Weise eine stilistisch einwandfreie glatte Oberfläche im Bereich der besagten Öffnung der Karosserie zu erzielen. Der Rand der Austrittsöffnung ist vorzugsweise kegelig und zentriert das Gehäuse in die besagte Öffnung, wenn die Spanneinrichtung betätigt wird.

Vorteilhaft sind die Spann- und die Justiereinrichtung selbsthemmend ausgelegt; montagegünstig ist insbesondere eine schrittweise Verstellung mittels Rastungen, die zur Demontage aufgehoben werden können. Hierdurch wird auch Nacharbeit vermieden; durch die Vorspannung des Stellantriebs werden ferner Temperaturdehnungen und im Fahrbetrieb auftretende mechanische Spannungen selbsttätig ausgeglichen.

Weitere Einzelheiten und Vorteile gehen aus der Zeichnung eines Ausführungsbeispiels und deren sich hier anschließender eingehender Beschreibung hervor.

Es zeigen
- Figur 1: eine Gesamtansicht des Stellantriebs in Einbaustellung in einem ausschnittweise dargestellten Kraftfahrzeug-Karosserie-Bauteil,
- Figur 2: eine im Bereich einer Öffnung zur Durchführung eines Stellglieds des Stellantriebs geschnittene Darstellung des Bauteils und des Stellantriebs entsprechend Figur 1,
- Figur 3: eine Darstellung einer an dem Gehäuse des Stellantriebs zu dessen Längenverstellung vorgesehenen Justiereinrichtung,
- Figur 3a: ein Detail der Justiereinrichtung nach Figur 3,
- Figur 4: eine Explosionsdarstellung einer Spanneinrichtung zur Verstellung des aufgeschnitten dargestellten Gehäuses des mit einem pneumatischen Membrankolben arbeitenden Stellantriebs gegenüber seiner Halterung und zu dessen Einspannen in die in Figur 1 gezeigte Einbaulage.

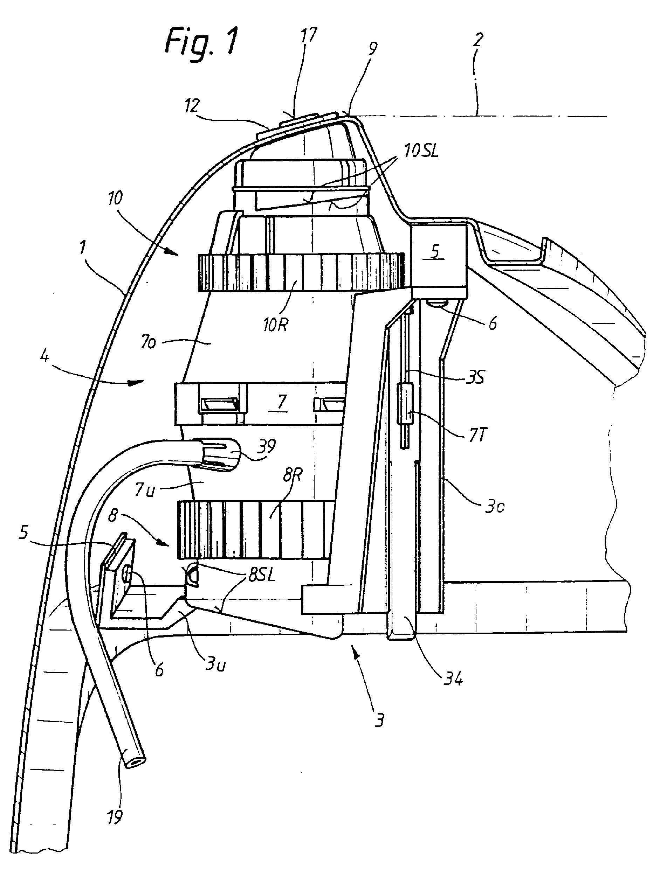

In einem Innenraum eines Bauteils 1 einer Karosserie 2 eines nicht weiter dargestellten Kraftfahrzeugs - z. B. in einem Eckbereich eines rückwärtigen Kotflügels - ist gemäß **Figur 1** eine Halterung 3 für einen stellantrieb 4 an zwei bauteilfesten Laschen 5 mittels Schrauben 6 befestigt. Der stellantrieb 4 hat ein Gehäuse 7 mit einem oberen Gehäuseteil 7o und einem unteren Gehauseteil 7u, welches in der Halterung 3 längs - in der Zeichnung in senkrechter Richtung - verschiebbar und drehfest geführt ist. Die Halterung 3 ist im wesentlichen L-förmig, wobei sie einen unteren, waagerecht angeordneten Schenkel 3u und einen oberen, senkrecht angeordneten Schenkel 3o aufweist. In den oberen Schenkel 3o ist ein nach oben offener Längsschlitz 3S eingeformt, in welchen ein im Querschnitt T-förmiger Ansatz 7T des Gehäuses 7 von oben her axial einführbar und darin gleitend geführt und verschiebbar ist. Durch diese Paarung Längsschlitz-Ansatz ist die verdrehsicherung des Gehäuses 7 gegenüber der Halterung 3 gebildet. Ferner ist an den oberen Schenkel 3o der Halterung 3 noch ein Rasthebel 34 angeformt, dessen Zweck später erläutert wird.
Mittels einer Spanneinrichtung 8 kann das gesamte Gehäuse 7 gegenüber der Halterung 3 und damit auch gegenüber dem Bauteil 1 linear angehoben bzw. abgesenkt werden. Beim Anheben wird das einseitig auf dem unteren Schenkel 3u der Halterung 3 abgestützte Gehäuse 7 gegen eine obere Abdeckung 9 des Innenraums des Bauteils 1 verspannt.
Damit wird insgesamt eine unter statischen und dynamischen Gesichtspunkten optimale Dreipunktabstützung des Stellantriebs hergestellt.
Am Gehäuse 7 ist auch eine Justiereinrichtung 10 vorgesehen, mittels deren das Gehäuse 7 in sich längenverstellbar ist.

Die Spanneinrichtung 8 und die Justiereinrichtung 10, die später im Zusammenhang mit ihrer Funktionsweise noch eingehender beschrieben werden, sind derart selbsthemmend - unter Einsatz von aufeinander abgleitenden Schraubenlinien 8SL bzw. 10SL - ausgelegt, daß eine selbsttätige Verstellung unter der Last der Verspannungskraft oder durch Vibrationen der Karosserie ausgeschlossen ist. Es ist ihnen jeweils ein von Hand drehbarer Verstellring 8R bzw. 10R zugeordnet.

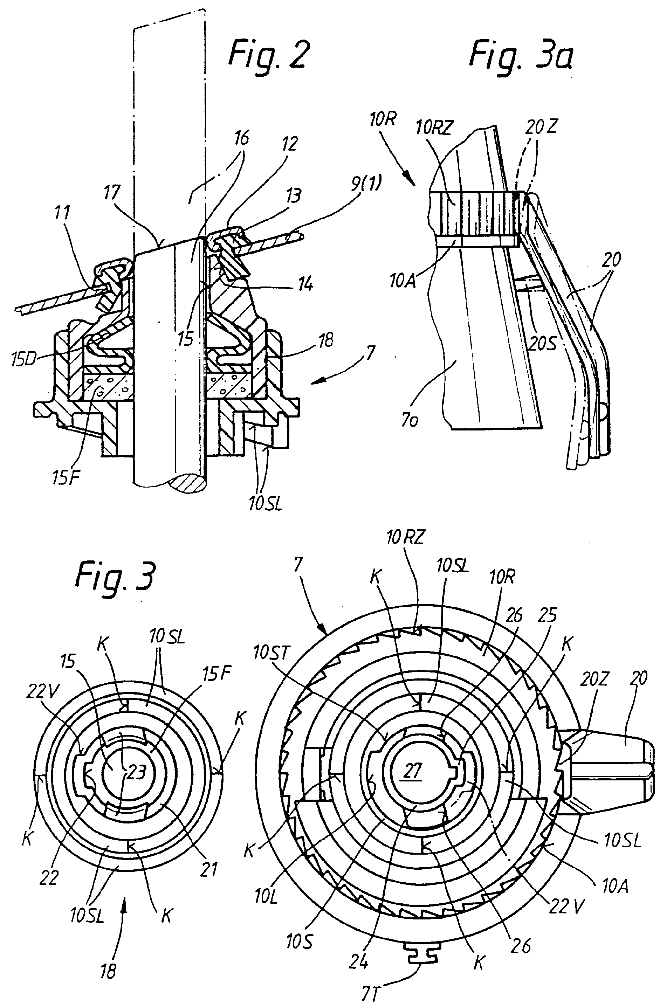

Wie aus der Schnittdarstellung in **Figur 2** noch deutlicher hervorgeht, ist in der oberen Abdeckung 9 des Bauteils 1 eine Öffnung 11 vorgesehen, in welche ein Ring 12 mit einer Dichtung 13 eingesetzt ist. Die Oberseite des Rings 12 liegt nahezu flächenbündig zur Außenseite der oberen Abdeckung 9 des Bauteils 1. Die Dichtung 13 dient zum einen zur Abdichtung des Spalts zwischen der Öffnung 11 und dem Ring 12, zum anderen innenseitig als elastische Anlage für einen kegelig zulaufenden Rand 14 einer Austrittsöffnung 15 des Gehäuses 7. Über die kegelige Außenkontur des Randes 14 wird das Gehäuse 7 während des erwähnten Verspannvorgangs und nach dessen Abschluß in die Öffnung 11 bzw. den Innenkreis der Dichtung 13 zentriert. Auf der Oberseite des Bauteils 1 liegt diese Dichtung 13 mit einer Lippe auf; in der Ebene der Öffnung 11 hat sie einen kleinen ringförmigen Hohlraum, der elastisches Nachgeben und eine federnde Abstützung des Randes 14 der Austrittsöffnung 15 ermöglicht. An der Unterseite der oberen Abdeckung 9 des Bauteils 1 liegt sie hingegen unmittelbar an.
Die mittels der Spanneinrichtung 8 zwischen das Gehäuse 7 und die Halterung 3 eingeleitete Spannkraft wird also zwischen der Halterung 3 bzw. den Laschen 5 einerseits und der in der Öffnung 11 der oberen Abdeckung 9 festgelegten Dichtung 13 bzw. dem Ring 12 andererseits abgestützt, wodurch sowohl in axialer als auch in radialer Richtung eine Einspannung erzielt und aufrechterhalten wird.

Durch die Austrittsöffnung 15 wird ein Stellglied 16 des Stellantriebs 4, das ein oberes freies Ende 17 hat, aus dem Gehäuse 7 nach außen durchgeführt. Das Stellglied 16 ist in seiner eingezogenen Ruhelage gezeichnet, während seine ausgefahrene Stellung nur strichpunktiert angedeutet ist. Die Austrittsöffnung 15, in der ein Gummidichtring 15D mit einem eingesetzten Filzring 15F das Stellglied umfaßt, ist in einem Oberteil 18 des Gehäuses 7 vorgesehen. Das Oberteil 18 ist von dem Gehäuse 7 abnehmbar und an diesem drehfest sowie mittels der Justiereinrichtung 10 längs - ebenfalls in senkrechter Richtung - verschiebbar geführt (Fig. 3), wobei die Verschiebung des Oberteils 18 eine Längenänderung des Gehäuses 7 in sich bewirkt. Mit der Justiereinrichtung 10 kann
- der Abstand des freien Endes 17 des Stellglieds 16 von dem Rand 14 der Austrittsöffnung 15 - in senkrechter Richtung - vorab eingestellt bzw.
- die Stellung des freien Endes 17 in der Öffnung 11 nach dem Verspannen des Stellantriebs 4 zwischen Halterung 3 und Öffnung 11 noch geringfügig nachjustiert werden.

Die mittels der Spanneinrichtung 8 vorgenommene Verspannung des Stellantriebs 4 kann also bei Bedarf mittels der Justiereinrichtung 10 entweder geringfügig verstärkt oder gelöst werden, um das freie Ende 17 mit der Oberseite des Rings 12 auszufluchten.

Die Oberseiten des Rings 12, des Randes 14 der Austrittsöffnung 15 und des freien Endes 17 des Stellglieds 16 sind ersichtlich der Karosserie-Flächenkontur der oberen Abdeckung 9 des Bauteils 1 im Bereich der Öffnung 11 exakt angepaßt, so daß sich in der Ruhelage des Stellglieds 16 eine praktisch durchgehend glatte Oberfläche im Bereich der Öffnung 11 ergibt, deren Herstellung durch die Spanneinrichtung 8 bzw. die Justiereinrichtung 10 vereinfacht wird.
Es versteht sich daher auch, daß das Stellglied 16 in dem Gehäuse 7 drehfest geführt sein muß.
Als bevorzugte Ausführung des Stellantriebs 4, der über einen pneumatischen Anschluß 39 des unteren Gehäuseteils 7u und eine (Schlauch-)Leitung 19 an eine Kraftquelle angeschlossen ist, wird ein an sich bekannter pneumatischer mit einem in dem Gehäuse 7 rundum eingespannten Membrankolben verwendet, der später noch genauer beschrieben wird (Fig. 5). In jedem Fall ist durch die besagte Einspannung die drehfeste Führung des mit dem Membrankolben verbundenen Stellglieds 16 gewährleistet.
Weil das Oberteil 18 vom Gehäuse 7 abnehmbar ist, kann der Stellantrieb für verschiedene Fahrzeugtypen standardisiert verwendet werden, wobei nur die Oberteile - und eventuell die Stellglieder - typenspezifisch vorgehalten werden müssen.
Der erwähnte Filzring 15F wird vor dem Einbau des Oberteils 18 mit einem Gleitöl getränkt. Die Reibung der polierten Oberfläche des Stellglieds 16 am Dichtring 15D wird damit vernachlässigbar gering, so daß zu seinem Aus- und Einfahren keine übermäßig hohen Stellkräfte aufgebracht werden müssen.
Die gewählte Anordnung ist auch unter Sicherheitsaspekten vorteilhaft, denn der pneumatische Bidruckantrieb ist bistabil und kann daher auch in der ausgefahrenen Stellung des Stellglieds drucklos sein. Letzteres läßt sich daher ohne nennenswerten Widerstand aus der ausgefahrenen Stellung wieder eindrücken, wenn axiale oder schräg gerichtete Kräfte auf es einwirken.

Zur Funktion der Spanneinrichtung 8 und der Justiereinrichtung 10 sei vorab angemerkt, daß beide nach demselben Prinzip arbeiten. Beide Verstellringe 8R und 10R sind, wie erwähnt, von Hand drehbar, wobei ihre Drehachsen in der Längs- bzw. Bewegungsachse des Stellglieds 16 liegen. Die Schraubenlinien 8SL bzw. 10SL bewirken beim Verdrehen der Verstellringe 8R bzw. 10R eine Hubbewegung des Oberteils 18 bzw. des Gehäuses 7.

Zwar steigen die Schraubenlinien 8SL bzw. 10SL nicht sehr steil an, da sie aber sehr leichtgängig abgleiten, muß eine zusätzliche Selbsthemmung vorgesehen werden.
Wie bereits aus Figur 1 ersichtlich wurde, sind die beiden Verstellringe 8R bzw. 10R mit einer Außenverzahnung 8RZ bzw. 10RZ aus Sägezähnen versehen.
Für beide Verstellringe ist je eine Ratscheneinrichtung vorgesehen, die eine Verdrehung normalerweise jeweils nur in eine Richtung zuläßt. Bei der Spanneinrichtung 8 wirkt diese Verdrehung im Sinne der Verlängerung des Gehäuses 7 in sich, bei der Justiereinrichtung 10 im Sinne des Anhebens des Gehäuses 7 bzw. des kompletten Stellantriebs 4 gegenüber der Halterung 3 bzw. dem Bauteil 1. Die Ratscheneinrichtungen verkörpern also eine Selbsthemmung der Spanneinrichtung 8 bzw. der Justiereinrichtung 10.

**Figur 3** zeigt die Details der Justiereinrichtung 10 in einer Draufsicht auf den Stellantrieb. Das Oberteil 18 ist hier vom Gehäuse 7 abgenommen und um 180° gedreht, so daß seine Unterseite sichtbar ist.
Die mit der Außenverzahnung 10RZ des Verstellrings 10R in Verbindung stehende Ratscheneinrichtung ist durch einen einstückig an das Gehäuse 7 angespritzten zweiarmigen Rasthebel 20 verkörpert, dessen oberes freies Ende mit einem komplementären Sägezahn 20Z in die Außenverzahnung 10RZ eingreift. Beim Drehen des Verstellrings 10R im Uhrzeigersinn gleiten die Schrägflächen der Sägezähne der Außenverzahnung 10RZ nacheinander über die Schrägfläche des komplementären Sägezahns 20Z, während eine gegenläufige Drehung durch Aneinanderstoßen der steilen Zahnflanken verhindert wird.
Auch der Querschnitt des T-förmigen Ansatzes 7T des Gehäuses 7 ist hier gut sichtbar.

In der Detail-Figur 3a), die eine Seitenansicht eines Ausschnitts des Stellantriebs 4 in dem Bereich zeigt, in dem der Rasthebel 20 angeformt ist, wird besser sichtbar, daß das untere freie Ende des Rasthebels 20 von Hand in Richtung auf das Gehäuse 7 gedrückt werden kann - strichpunktiert angedeutete Stellung -, um den komplementären Sägezahn 20Z außer Eingriff mit der Außenverzahnung 10RZ zu bringen und während der Dauer der Handbetätigung des Rasthebels 20 eine gegenläufige Verdrehung des Verstellrings 10R - im Sinne der Absenkung des Oberteils 18 - zu ermöglichen.
Hierzu ist die einstückige Verbindung des Rasthebels 20 zum Gehäuse 7 durch einen Steg 20S hergestellt, der sich näher am oberen freien Ende des Rasthebels 20 befindet.
Außerdem wird in Figur 3a deutlich, daß der komplementäre Sägezahn 20Z des Rasthebels 20 im Eingriff mit der Außenverzahnung 10RZ ferner einen Außenring 10A des Verstellrings 10R - dessen Durchmesser dem der Hüllkurve der Außenverzahnung 10RZ entspricht - hintergreift und damit eine einfache - aushebbare - axiale Sicherung des Verstellrings 10R auf dem Gehäuse 7 schafft.

Durch Figur 3 wird ferner verdeutlicht, daß mit dem Verstellring 10R einstückig ein Scheibenkörper 10S verbunden ist. Die einstückige Verbindung erstreckt sich nur über einen Teil des Umfangs des Verstellrings. Die bereits erwähnten Schraubenlinien 10SL sind - einerseits auf dem Scheibenkörper 10S, andererseits komplementär auf der Unterseite des Oberteils 18 - auf zwei konzentrischen Kreisen mit unterschiedlichen Radien angeordnet. Im einzelnen erstrecken sich die Schraubenlinien 10SL jeweils gleichen Radius' jeweils paarweise über den halben Umfang (also 180°), und die Paare von Schraubenlinien unterschiedlichen Radius' sind gegeneinander um 90° versetzt. Sie werden jeweils durch halbkreisförmige Rampen gebildet, die einstückig an den Verstellring 10R bzw. das Oberteil 18 angeformt sind.

Die Rampenendstufen sind hier als Körperkanten K sichtbar. Die Rampenanfänge und -endstufen an dem jeweiligen Bauteil liegen natürlich jeweils auf gleichem Niveau.
Aus dieser Anordnung ergibt sich neben der Höhenverstellung des Oberteils 18 auf dem Gehäuse 7 beim Verdrehen des Verstellrings 10R auch eine zusätzliche radiale Führung durch die Rampen, deren Oberseiten die Schraubenlinien bilden, weil diese ineinander geschachtelt sind.
Zentrisch in den von den Schraubenlinien 10SL umschriebenen Kreisen hat der Scheibenkörper 10S ein etwa kreisförmiges Loch 10L, dessen Halbmesser über einen kleineren Teil seines Umfangs (ca. 60°) durch eine Stufenkontur 10ST geringfügig verkürzt ist. Auf deren Zweck wird später noch näher eingegangen.

Auf der Unterseite des Oberteils 18 ist ferner konzentrisch zu den halbkreisförmigen Rampen bzw. Schraubenlinien 10SL ein Rohrstutzen 21 vorgesehen, in den eine Nut 22 eingeformt und an den zwei Clipshaken 23 einstückig angespritzt sind. Der Rohrstutzen 21 bildet eine koaxiale Fortsetzung der Austrittsöffnung 15 - in der auch der Filzring 15F sichtbar ist - in das Innere des Gehäuses 7 hinein. Die beiden Clipshaken 23 sind bezüglich des Umfangs des Rohrstutzens 21 unsymmetrisch angeordnet. Weil die Wandstärke des Rohrstutzens 21 gering ist, ist im Bereich der Nut 22 eine stufige Halbmesservergrößerung 22V des Rohrstutzens über einen relativ kleinen Umfangswinkel hinweg angeformt.

In diesem kleinen Unfangsbereich 22V hat der Rohrstutzen 21 annähernd den gleichen Halbmesser wie das Loch 10L im Scheibenkörper 10S auf seinem größeren Umfangsanteil, während der Halbmesser des überwiegenden Teils des Umfangs des Rohrstutzens 21 annähernd gleich dem im Bereich der Stufenkontur 10ST verkürzten Halbmesser des Lochs 10L entspricht.
Zur Verdeutlichung des Zwecks dieser Anordnung ist auf der Oberseite des Gehäuses 7 mit dem aufgesetzten Verstellring 10R und Scheibenkörper 10S in dünnen, strichpunktierten Linien noch ein kleiner Ausschnitt des Rohrstutzens 21 dargestellt. Die Halbmesservergrößerung 22V des Rohrstutzens 21 im Bereich der Nut 22 bildet ersichtlich im Zusammenwirken mit der Stufenkontur 10ST am Scheibenkörper 10S des Verstellrings 10R eine Begrenzung des möglichen Drehwinkels des Verstellrings 10R, wobei der Rohrstutzen 21 im Einbauzustand in das Loch 10L eingeführt ist und sich der Verstellring 10R gegenüber dem Oberteil 18 jeweils so weit verdrehen läßt, bis eine Begrenzung der Stufenkontur 10ST an eine Begrenzung der stufigen Halbmesservergrößerung 22V anläuft. Der mögliche Drehwinkel ist vorteilhaft mit ca. 180° so dimensioniert, daß zwar eine volle Ausnutzung der Höhenverstellung mittels der Schraubenlinien 10SL möglich ist, daß aber ein Überspringen vom höchsten Punkt der jeweiligen Schraubenlinie (der Rampenendstufe) in den tieferliegenden Beginn der anschließenden - durch unnötiges weiterdrehen des Verstellrings 10R - verhindert wird.
In der Gegenrichtung wird das Weiterdrehen ohnehin durch das Aneinanderstoßen der Rampenendstufen verhindert.

Im Verein mit der Nut 22 bilden die Clipshaken 23 Bestandteile einer Lagecodierung durch äußere Formgebung, die nur eine bestimmte Anbringung des Oberteils 18 am Gehäuse 7 erlaubt und gleichzeitig eine Verdrehsicherung sowie die axiale Führung des Oberteils 18 darstellt.
Korrespondierende Bestandteile dieser Lagecodierung sind an der Oberseite des oberen Gehäuseteils 7o ein Rohrstutzen 24 mit einer angeformten Paßfeder 25 sowie zwei Ausnehmungen 26. Der Rohrstutzen 24 umschließt eine Durchführungsöffnung 27 im Gehäuse 7 und bildet deren koaxiale Fortsetzung nach außen. Die Durchführungsöffnung 27 fluchtet mit der Austrittsöffnung 15, wenn das Oberteil 18 aufgesetzt ist. Hierzu werden die Clipshaken 23 in die Ausnehmungen 26 und wird die Paßfeder 25 in die Nut 22 eingeführt. Gleichzeitig dringt das freie Ende 17 des Stellglieds 16 in die Austrittsöffnung 15 ein (vgl. Fig. 2). Die Clipshaken 23 können den jeweiligen Rand der Ausnehmung 26 im Inneren des Gehäuses 7 hintergreifen und verhindern ein Herausfallen des Oberteils 18 aus dem Gehäuse 7.

Hinzu kommt bei der Montage des Oberteils 18 im Verhältnis zu dem bereits gemäß Figur 3a) auf das Gehäuse 7 aufgesetzten Verstellring 10R noch eine zwangsläufig richtige Positionierung der Nut 22 in dem Bereich größeren Umfangs des Lochs 10L. Wenn sich das Oberteil 18 also trotz richtiger Positionierung der Nut 22 und der Clipshaken 23 nicht richtig aufsetzen läßt, muß zunächst der gemäß Figur 3a) aufgesetzte Verstellring so verdreht werden, daß die besagte Nut in den Umfangsteil des Lochs 10L mit größerem Halbmesser eingeführt werden kann.
Nachdem die Clipshaken 23 in den Ausnehmungen 26 verrastet sind, sind das Oberteil 18 und der Verstellring 10R sicher am Gehäuse 7 befestigt, wobei der Verstellring 10R nur mittelbar über die Befestigungsmittel des Oberteils 18 am oberen Gehäuseteil 7o befestigt ist. Es versteht sich, daß die Clipshaken mindestens so lang sind, daß die Verschiebung des Oberteils 18 beim Drehen des Verstellrings 10R nicht behindert wird, daß also deren Clipsnasen entsprechend weit von der sichtbaren Stirnseite des Rohrstutzens 21 entfernt sind.

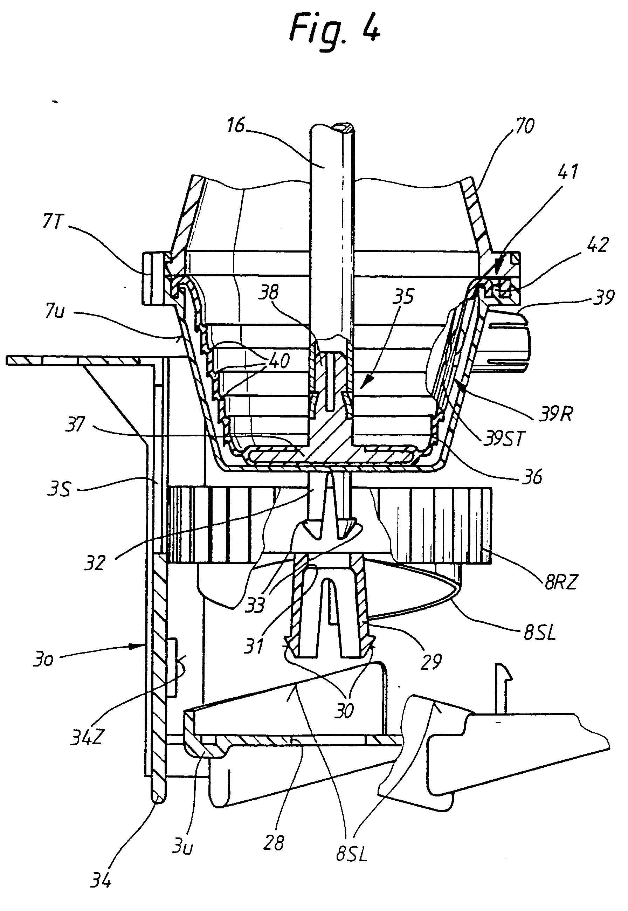

Die Explosionsdarstellung der Spanneinrichtung 8 nach Figur 4 läßt erkennen, daß auch deren - teilweise geschnitten dargestellter - Verstellring 8R einstückig mit einem Scheibenkörper 8S verbunden ist, welcher Schraubenlinien 8SL trägt. Die Konfiguration der Schraubenlinien 8SL entspricht völlig der der Schraubenlinien 10SL der Justiereinrichtung 10, nämlich zwei um 90° gegeneinander versetzten Paaren von halbkreisförmigen Rampen, die sich jeweils über den halben Umfang zweier konzentrischer Kreise erstrecken. Komplementäre Schraubenlinien 8SL sind hier in den unteren Schenkel 3u der Halterung 3 eingeformt.

Prinzipiell könnten diese aber auch an die Unterseite des Gehäuses 7 angeformt werden.
Im Zentrum der durch die Schraubenlinien 8SL umschriebenen Kreise weist der untere Schenkel 3u der Halterung 3 ein Loch 28 auf.
In dieses Loch 28 ist ein einstückig an den Scheibenkörper 8S des Verstellrings 8R angespritzter Hohlzapfen 29 einführbar, dessen Schaftdurchmesser dem Durchmesser des Lochs 28 entspricht. Der Hohlzapfen 29 ist längs geschlitzt und weist an seinen freien Enden jeweils auskragende Clipsnasen 30 auf, deren Außenmaß größer ist als der Durchmesser des Lochs 28, so daß sie dessen Rand nach dem Einsetzen des Hohlzapfens 29 in das Loch 28 nach vorübergehendem Einfedern hintergreifen können und den Verstellring 8R an der Halterung 3 lose und drehbar sichern. Eine auf einen bestimmten Hub begrenzte Verschiebe-Beweglichkeit des Verstellrings 8R gegenüber der Halterung in Achsrichtung des Hohlzapfens 29 bleibt erhalten, die für das Anheben des Verstellrings 8R sowie des Gehäuses 7 bei Verdrehung des Verstellrings ausgenutzt wird. Sie ist mithin mindestens so groß wie die projizierte maximale Höhe der Schraubenlinien 8SL.

Die Innenhöhlung des Hohlzapfens 29 setzt sich durch die Ebene des Scheibenkörpers 8S fort, ihr Querschnitt ist in dieser Ebene jedoch durch eine Stufe 31 verengt.
An der geschlossenen Unterseite des unteren Gehäuseteils 7u des Stellantriebs 4 ist ebenfalls ein längs geschlitzter Hohlzapfen 32 mit endseitigen Clipsnasen 33 angespritzt. Dessen Außenmaß am Schaft entspricht dem durch die Stufe 31 verengten Innenmaß des Hohlzapfens 29, während das über die Clipsnasen 33 gemessene Außenmaß geringfügig größer ist. Der Hohlzapfen 32 kann also in den Innenraum des Hohlzapfens 29 axial eingeführt werden, wobei seine Clipsnasen 33 vorübergehend elastisch einfedern und im ausgefederten Einbauzustand die Stufe 31 hintergreifen.
Da der Scheibenkörper 8S auf seiner dem Gehäuse 7 zugewandten Oberseite glatt ist, kann der Verstellring 8R nach dem Einstecken des Gehäuse-Hohlzapfens 31 in den Scheibenkörper-Hohlzapfen 29 frei gegenüber dem unterseitig abgesehen von dem Hohlzapfen 31 ebenfalls glatten Gehäuse 7 verdreht werden, wobei auch hier eine durch die Clipsnasen 33 begrenzte Verschiebebeweglichkeit in Achsrichtung der Hohlzapfen 29 bzw. 32 verbleibt.
Es ist nicht möglich, den Gehäuse-Hohlzapfen 31 von der falschen Seite her in den Scheibenkörper-Hohlzapfen 29 einzusetzen und darin zu verrasten, weil letzterer länger als ersterer ist und die Clipsnasen 33 in diesem Fall die Stufe 31 nicht erreichen, geschweige denn hintergreifen können.
Nacheinander oder auch miteinander bereits vorab in der beschriebenen Weise verbunden können der Verstellring 8S und das Gehäuse 7 nunmehr in das Loch 28 des unteren Schenkels der Halterung eingesetzt werden, um darin die in Figur 1 gezeigte Stellung einzunehmen. In diesem Vormontagezustand bilden die Halterung 3 und das Gehäuse 7 des Stellantriebs eine Einheit. Darin ist der Verstellring 8R zwischen dem unteren Schenkel 3u der Halterung 3 und dem unteren Gehäuseteil 7u so angeordnet, daß das Gehäuse 7 mittelbar über den Scheibenkörper 8S des Verstellrings 8 einseitig an der Halterung 3 abgestützt ist.

Der einstückig an den oberen Schenkel 3o der Halterung 3 angeformte, geradlinig ausgeführte Rasthebel 34 greift in gleicher Weise, wie im Zusammenhang mit dem Rasthebel 20 der Justiereinrichtung 10 bereits beschrieben, mit einem oder zwei komplementären Sägezähnen 34Z in die Außenverzahnung 8RZ des Verstellrings 8R ein. In Wechselwirkung mit dieser bildet er ebenfalls eine selbsthemmende, jedoch auslösbare Ratscheneinrichtung. Die Auslösung wird hier bewirkt, indem das nach unten zeigende freie Ende des Rasthebels 34 von Hand von dem Gehäuse 7 weggezogen wird. Dabei wird der Eingriff der komplementären Sägezähne 34Z in die Außenverzahnung 8RZ aufgehoben, so daß der Verstellring 8R auch in Gegenrichtung verdreht werden kann, um die Einspannung des Gehäuses 7 gegen die obere Abdeckung 9 aufzuheben.
Es ist bezüglich der Dimensionierung der komplementären Sägezähne 34Z darauf zu achten, daß sie über den gesamten beim Einspannen des Gehäuses möglichen begrenzten Hub des Verstellrings 8R (der mindestens der maximalen (projizierten) Steighöhe der Schraubenlinien 8SL entspricht) in Eingriff mit dessen Außenverzahnung 8RZ bleiben. Dieser Aspekt gilt nicht für die Justiereinrichtung 10, weil bei dieser nicht der Verstellring 10R selbst verschoben wird.

Der Querschnitt durch das Gehäuse 7 des Stellantriebs 4 zeigt einen bevorzugt gewählten Membrankolben 35, dessen Membran 36 in bekannter Weise rundum randseitig zwischen dem oberen Gehäuseteil 7o und dem unteren Gehäuseteil 7u eingespannt ist. Zwischen der Membran 36 und der Innenwand des unteren Gehäuseteils 7u ist mithin eine Arbeitskammer 35K eingegrenzt. Ersichtlich ist der pneumatische Anschluß 39 - der nach außen über die Leitung 19 fortgeführt wird - so in dem unteren Gehäuseteil 7u angeordnet, daß das Stellglied 16 durch Überdruckbeaufschlagung des Membrankolbens 35 ausgefahren und durch Unterdruckbeaufschlagung wieder eingezogen werden kann.
Fest mit der Membran 36 durch Umspritzen verbunden ist ein Kolbenteller 37, der wiederum einen zentrischen Schaftansatz 38 trägt, auf welchen das Stellglied 16 aufgesteckt ist. In die Innenwand des unteren Gehäuseteils 7u ist von dem pneumatischen Anschluß 39 ausgehend zum Boden des Gehäuseteils 7u hin eine Rinne 39R mit einem längs in dieser verlaufenden Steg 39ST eingeformt. Mit dieser Gestaltung wird verhindert, daß die Membran 36 den mit Unterdruck beaufschlagten Anschluß 39 bereits beim Darüberrollen verschließt und somit nicht weitergerollt würde, bevor sie ihre untere Endlage erreicht hat.

Zwar könnte prinzipiell der pneumatische Anschluß 39 auch in den Hohlzapfen 32 integriert werden, so daß auf jeden Fall die Luft vom untersten Niveau der Arbeitskammer abgesaugt bzw. dort hineingepumpt werden könnte. Diese Möglichkeit wird jedoch wegen eventueller Kondenswasserbildung und -ansaugung nicht ausgeführt.
Da der Stellantrieb nur eine Arbeitskammer hat, braucht die Austrittsöffnung 15 mit dem Dichtring 15D nur gegen eindringendes Wasser abgedichtet zu werden; pneumatischer Über- bzw. unterdruck tritt dort nicht auf.

An die Membran 36 sind Rippen 40 angeformt, die übermäßigen Verschleiß der Membran verhindern. Da der Stellantrieb 4 bzw. das Stellglied 16 einen relativ großen Hub über mehrere Zentimeter ausführen muß, rollt die Membran 36 an der Gehäuseinnenwand über einen längeren Bereich ab, wobei gleitende Reibung auftritt, die nach längerer Betriebsdauer einer glatten Membran zu deren Undichtigkeit aufgrund Materialabriebs führen kann. Durch die Rippen 40, die die Abrollbewegung selbst in keiner Weise behindern, kommt es in der vorliegenden Ausführung nur zu einer Linienberührung und ist zusätzlich das Membranmaterial an den kritischen Stellen verstärkt, so daß die Lebensdauer der Membran verlängert wird.

Zur eindeutigen Vorgabe der Lage der Membran 36 und des mit ihr verbundenen Stellglieds 16 - die im Hinblick auf die zu Figur 2 beschriebene Erzielung einer glatten Oberfläche wichtig ist - dient eine Form-Lagecodierung. An den Rand der Membran ist eine Lasche mit einer Ausnehmung 41 eingeformt, die zur Aufnahme einer in den unteren Gehäuseteil 7u entsprechend eingeformten Nase 42 dient.
Zwischen dem Schaftansatz 38 und dem Stellglied 16 kann eine lösbare Steckverbindung, z. B. mit Clips- oder Bajonettverschluß, vorgesehen werden, die einen einfachen Austausch des Stellglieds 16 ermöglicht. Diese muß allerdings ebenfalls bezüglich der Längsachse des Stellglieds drehfest sein. Auf diese Weise können fahrzeugtypspezifische Stellglieder - die Oberseite von deren freien Enden kann unterschiedlichen Schrägungsanforderungen je nach Karosseriekontur unterliegen - wie die Oberteile 18 vorgehalten und je nach Bedarf in den standardisierten Stellantrieb 4 eingebaut werden.

## Patentansprüche

1. Stellantrieb (4) zum Einbau in einen Bauteil (1) einer Karosserie (2) eines Kraftfahrzeugs,
umfassend
- ein Gehäuse (7) mit einer Austrittsöffnung (15),
- ein in dem Gehäuse (7) geführtes, unter Durchdringung der Austrittsöffnung (15) ein- und ausfahrbares Stellglied (16),
- eine Halterung (3) zur Befestigung des Gehäuses (7) an der Karosserie (2),
wobei die Austrittsöffnung (15) des befestigten Gehäuses (7) randseitig an einem Rand (14) einer ebenfalls von dem Stellglied (16) durchdringbaren Öffnung (11) der Karosserie (2) abgestützt ist,
**dadurch gekennzeichnet,**
daß eine Spanneinrichtung (8) zum Verschieben des einseitig wenigstens mittelbar an der Halterung (3) abgestützten und gegenüber dieser in Bewegungsrichtung des Stellglieds (16) entlang einer Verschiebeachse hin und her verschiebbar geführten Gehäuses (7) vorgesehen ist, mittels deren eine von dem Gehäuse (7) anderseitig abragende Außenkontur eines Randes (14) der Austrittsöffnung (15) des Gehäuses (7) gegen eine Innenseite der Öffnung (11) der Karosserie (2) spannbar ist.

2. Stellantrieb nach Anspruch 1,
**gekennzeichnet durch**
- drehfeste Führung (7T) des Gehäuses (7) in der Halterung (3, 3o, 3S) mittels eines parallel zu der Verschiebeachse des Gehäuses (7) verlaufenden Schlitzes (3S) in der Halterung (3) und eines in den Schlitz (3S) der Halterung (3) einführbaren, darin wenigstens um einen begrenzten Hub gleitend verschiebbaren Ansatzes (7T) des Gehäuses (7)
- selbsthemmende Ausführung (34, 34Z) der mit einem drehbar gelagerten Verstellring (8R) versehenen Spanneinrichtung (8).

3. Stellantrieb nach Anspruch 2,
**gekennzeichnet durch**
- um die Verschiebeachse des Gehäuses (7) drehbare, entlang derselben Achse zumindest um einen begrenzten Hub verschiebbare Lagerung des zwischen der Halterung (3, 3u) und dem Gehäuse (7, 7u) angeordneten Verstellrings (8R) der Spanneinrichtung (8) in der Halterung (3, 3u), wobei das Gehäuse (7) mittelbar über den Verstellring (8R, Scheibenkörper 8S) einseitig an der Halterung (3) abgestützt ist.
- mindestens ein Paar von komplementären, aufeinanderliegenden Schraubenlinien (8SL) an dem Verstellring (8R, 8S) einerseits und an der Halterung (3, 3u) andererseits, die bei Verdrehung des Verstellrings (8R) aufeinander gleiten,
wobei
- der begrenzte Hub mindestens der maximalen Steighöhe der Schraubenlinien (8SL) entspricht und
- das Aufeinandergleiten der komplementären Schraubenlinien (8SL) die Verschiebung des Gehäuses (7) und des Verstellrings (8R) gegenüber der Halterung (3) in vom Drehsinn des Verstellrings (8R) abhängiger Richtung bewirkt.

4. Stellantrieb nach Anspruch 2,
**gekennzeichnet durch**
- eine an den Verstellring (8R) der Spanneinrichtung (8) angeformte Außenverzahnung (8RZ),
- einen an die Halterung (3, oberer Schenkel 3o) einstückig angeformten Rasthebel (34) der Spanneinrichtung (8) mit mindestens einem zu der Außenverzahnung (8RZ) komplementären, in diese über den gesamten begrenzten Hub des Verstellrings (8R) eingreifenden Zahn (34Z), der durch Biegen des Rasthebels (34) von Hand außer Eingriff mit der Außenverzahnung (8RZ) bringbar ist,
wobei die Außenverzahnung (8RZ) des Verstellrings (8R) zusammen mit dem komplementären Zahn (34Z) eine Selbsthemmung der Spanneinrichtung (8) verkörpert.

5. Stellantrieb nach Anspruch 3,
**gekennzeichnet durch**
eine Clipsanordnung (Hohlzapfen 29, Clipsnasen 30, Hohlzapfen 32, Clipsnasen 33) zur den begrenzten Hub entlang der Verschiebeachse ermöglichenden Festlegung des Verstellrings (8R) der Spanneinrichtung (8) und des Gehäuses (7) an der Halterung (3, 3u).

6. Stellantrieb nach Anspruch 1,
**gekennzeichnet durch**
- ein die Austrittsöffnung (15) enthaltendes, von dem Gehäuse (7) abnehmbares Oberteil (18) und
- konische Ausformung der Außenkontur des Randes (14) der Austrittsöffnung (15).

7. Stellantrieb nach Anspruch 6,
**dadurch gekennzeichnet,**
daß an das Oberteil (18) Clipshaken (23) einstückig angeformt sind,
daß in einen oberen Gehäuseteil (7o) Ausnehmungen (26) eingeformt sind, in welche die Clipshaken (23) unter vorübergehender elastischer Verformung zum losen Verrasten des Oberteils (18) mit dem Gehäuse (7, 7o) einführbar sind, wobei das Oberteil (18) in dem Gehäuse (7) durch die eingeführten Clipshaken (23) drehfest geführt ist.

8. Stellantrieb nach Anspruch 6, dessen Stellglied ein freies Ende mit einer Oberseite hat, die in eingefahrener Ruhelage des Stellglieds wenigstens annähernd fluchtend mit der Kontur der Karosserie im Bereich der Öffnung abschließt,
**gekennzeichnet durch**
- eine selbsthemmende Justiereinrichtung (10) zum Verschieben des im Gehäuse (7, 7o) drehfest um einen begrenzten Hub verschiebbar geführten Oberteils (18) in Bewegungsrichtung, jedoch ohne Verstellung des Stellglieds (16) gegenüber dem Gehäuse (7),
wobei durch Verschieben des Oberteils (18)
- die Gesamtlänge des Gehäuses (7) veränderbar ist und
- die Relativlage des Randes (14) der Austrittsöffnung (15) des Gehäuses (7) gegenüber dem freien Ende (17) des Stellglieds (16) einstellbar ist.

9. Stellantrieb nach Anspruch 8,
**gekennzeichnet durch**
eine Form-Lagecodierung (Clipshaken 23 / Ausnehmungen 26; Nut 22 / Paßfeder 25) zwischen dem Oberteil (18) und dem Gehäuse (7), welche eine Befestigung des Oberteils (18) am Gehäuse (7) nur in einer bestimmten eindeutigen Relativlage erlaubt.

10. Stellantrieb nach Anspruch 8,
**gekennzeichnet durch**
- einen am Gehäuse (7, oberer Gehäuseteil 7o) um die Bewegungsachse des Stellglieds (16) verdrehbar, jedoch unverschiebbar gehalterten Verstellring (10R) der Justiereinrichtung (10),
- mindestens ein Paar von komplementären, aufeinanderliegenden Schraubenlinien (10SL) an dem Verstellring (10R, 10S) einerseits und an dem Oberteil (18) andererseits, die bei Verdrehung des Verstellrings (10R) aufeinander gleiten,
wobei das Aufeinandergleiten der komplementären Schraubenlinien (10SL) die Verschiebung des Oberteils (18) gegenüber dem Gehäuse (7) in vom Drehsinn des Verstellrings (10R) abhängiger Richtung bewirkt.

11. Stellantrieb nach Anspruch 10,
**dadurch gekennzeichnet,**
daß der Verstellring (10R) der Justiereinrichtung (10) einen einstückig ausgebildeten Scheibenkörper (10S) mit einem zentrischen Loch (10L) umfaßt, an welchen die Schraubenlinien (10SL) einstückig angeformt sind und welcher in einer Ebene zwischen dem Oberteil (18) und dem Gehäuse (7) angeordnet ist, und daß der Verstellring (10R) der Justiereinrichtung (10) am oberen Gehäuseteil (7o) mittels der den Scheibenkörper (10S) durchdringenden Clipshaken (23) des Oberteils (18) befestigt ist.

12. Stellantrieb nach Anspruch 10,
**gekennzeichnet durch**
eine Außenverzahnung (10RZ) des Verstellrings (10R) der Justiereinrichtung (10),
einen an das Gehäuse (7, oberer Gehäuseteil 7o) einstückig angeformten Rasthebel (20) der Justiereinrichtung (10) mit mindestens einem zu der Außenverzahnung des Verstellrings (10R) komplementären, in diese über den gesamten begrenzten Hub des Verstellrings (10R) eingreifenden Zahn (20Z), der durch Biegen des Rasthebels (20) von Hand außer Eingriff mit der Außenverzahnung bringbar ist.

13. Stellantrieb nach Anspruch 12,
**gekennzeichnet durch**
einen Außenring (10A) des Verstellrings (10R), dessen Außendurchmesser dem Hüllkreis der Außenverzahnung (10RZ) des Verstellrings (10R) der Justiereinrichtung (10) entspricht und welcher von dem mit der besagten Außenverzahnung in Eingriff stehenden komplementären Zahn (34Z) des Rasthebels (34) hintergreifbar ist,
wodurch eine Sicherung des Verstellrings (10R) der Justiereinrichtung (10) gegen axiales Verschieben auch bei abgenommenem Oberteil (18) herstellbar ist.

14. Stellantrieb nach Anspruch 11,
**gekennzeichnet durch**
eine Form-Lagecodierung (Halbmesservergrößerung 22V / stufige Kontur 10ST) zwischen dem Oberteil (18) und dem Verstellring (10R), welche eine Befestigung des Oberteils (18) am Gehäuse (7) nur in einer bestimmten eindeutigen Relativlage zu dem Verstellring (10R) erlaubt und gleichzeitig den möglichen Verdrehwinkel des Verstellrings (10R) gegenüber dem Oberteil (18) begrenzt.

15. Stellantrieb nach Anspruch 1 oder 8,
**gekennzeichnet durch**
- eine randseitig rundum zwischen einem oberen Gehäuseteil (7o) und einem unteren Gehäuseteil (7u) eingespannte, mit sich über ihren Umfang erstreckenden Rippen (40) versehene Rollmembran (36) eines bistabilen Membrankolbens (35), der mit dem Stellglied (16) verbunden ist,
- einen in einer Wand des unteren Gehäuseteils (7u) angeordneten pneumatischen Bidruck-Anschluß (39).

16. Stellantrieb nach Anspruch 15,
**gekennzeichnet durch**
eine lösbare Verbindung zwischen dem Stellglied (16) und dem Membrankolben (35), insbesondere eine Clips- oder Bajonettverbindung.

## Claims

1. An actuator (4) for installation in an assembly (1) of a body (2) of a motor vehicle, including
- a housing (7) with an orifice (15)
- an extendible and retractable actuator means (16) guided in said housing (7) by penetration of said orifice (15),
- a support (3) for the attachment of said housing (7) to said body (2),
in which the orifice (15) of the attached housing (7) rests on the side of its edge on an edge (14) of an orifice (11) in the body (2), also being penetrated by said actuator means (16),
**characterised in,**
tensioning means (8) being provided for the movement of said housing (7), resting at least indirectly on one side of said support (3) in relation to said support, being slidable in the direction of said actuator means (16) to and fro along a sliding axle, with which an outer profile of an edge (14) protruding from the other side of said housing (7) of said orifice (15) of said housing (7) can be tensioned against an inside surface of the orifice (11) of said body (2).

2. An actuator according to claim 1,
**characterised by**
- guide (7T) of said housing (7) in said support (3, 3o, 3S) being non-rotating due to a slot (3S) in said support (3) running parallel to the sliding axis of said housing (7) and a projection (7T) of said housing (7) being insertable in said slot (3S) of said support (3) and slidable therein by at least a limited lift height
- self-locking design (34, 34Z) of said tensioning means (8) containing an adjustment ring (8R) with rotatable bearings.

3. An actuator according to claim 2,
**characterised by**
- bearing of said adjustment ring (8R) of said tensioning means (8) in said support (3, 3u) being positioned between said support (3, 3u) and said housing (7, 7u) and being rotatable along the slidable axis of said housing by at least a limited lift height, said housing (7) being indirectly held on one side by said support (3) via said adjustment ring (8R, disk body 8s).
- at least one pair of complementing spirals, positioned on top of one another on said adjustment ring (8R, 8S) on one side and said support (3, 3u) on the other, which on rotation of the adjustment ring (8R) slide on top of one another,
whereby
- the limited lift height corresponds at least to the maximum lift height of the spirals (8SL) and
- the complementing spirals (8SL) sliding on top of one another cause the sliding of the housing (7) and the adjustment ring (8R) relative to said support (3) in the direction depending on the rotating direction of said adjustment ring (8R).

4. An actuator according to claim 2,
**characterised in**
- external toothing (8RZ) being fixed to said adjustment ring (8R) of said tensioning means (8),
- a catch lever (34) formed in one piece on the support (3, upper side 30) of said tensioning means (8) with at least one engaging tooth (34Z) complementing said external toothing (8RZ) on the complete limited lift height of the adjustment ring which by manual bending of said catch lever (34) can be disengaged from said external toothing (8RZ),
in which said external toothing (8RZ) of the adjustment ring (8R) together with the complementing tooth (34Z) represents a self-locking device of the tensioning means (8).

5. An actuator according to claim 3,
**characterised by**
- a clip arrangement (hollow shaft 29, clip projections 30, hollow shaft 32, clip projections 33) enabling the setting of the limited lift height on said sliding axis for said adjustment ring (8R) of said tensioning means (8) and said housing (7) on said support (3, 3u).

6. An actuator according to claim 1,
**characterised in**
- an upper part (18) being detachable from said housing (7) and containing said orifice (15), and
- outer profile of said edge (14) of said orifice (15) being conically shaped.

7. An actuator according to claim 6,
**characterised by,**
- clip hooks (23) being singly fitted to said upper part (18),
recesses (26) being formed in an upper housing part (7o) in which said clip hooks (23) can be inserted, being temporarily elastically formed to loosely lock said upper part (18) with said housing (7, 7o) and with said upper part (18) being guided without rotation in said housing (7) by said inserted clip hooks (23).

8. An actuator according to claim 6, actuator means containing a free end with an upper side, which in the inserted neutral position of said actuator means is at least nearly aligned with the profile of the body in the area of the orifice,
**characterised by**
- self-locking adjusting means (10) for the movement of said upper part (18) being guided and moveable without rotation by a limited lift height in said housing (7, 7o) in the direction of movement, without, however, adjustment of actuator means (16) in relation to said housing (7),
in which by moving said upper part (18)
- the total length of said housing (7) can be adjusted and
- the relative position of said edge (14) of said orifice (15) of said housing (7) is adjustable in relation to the free end (17) of said actuating means (18).

9. An actuator according to claim 8,
**characterised by**
a form-position coding (clip hooks 23 / recesses 26; slot 22 / feather 25) between said upper part (18) and said housing (7) enabling fixation of said upper part (18) on said housing (7) only in a certain definite relative position.

10. An actuator according to claim 8,
**characterised by**
- adjustment ring (10R) of said adjusting means (10) being fixed to housing (7, upper housing part 7o) and rotatable but not slidable on the movement axis of said actuator means (16),
- at least one pair of complementing spirals (10SL) lying on top of one another, on the adjustment ring (10R, 10S) on one hand and the upper part (18) on the other, which by turning the adjustment ring (10R) slide on top of one another,
whereby said sliding on top of one another of the complementing spirals (10SL) cause the movement of the upper part (18) towards said housing (7) in the direction depending on the direction of rotation of the adjustment ring (10R).

11. Actuator means according to claim 10,
**characterised by**
the adjustment ring (10R) of said adjusting means (10) containing a disk body (10S) formed in one piece and containing a centrical hole (10L) to which said spirals (10SL) are fixed in one piece, being positioned on one level between said upper part (18) and said housing (7) said adjustment ring (10R) of said adjusting device (10) being fixed on the upper housing part (7o) by said clip hooks (23) of the upper part (18) protruding through said disk body (10S).

12. An actuator according to claim 10,
**characterised by**
external toothing (10RZ) of said adjustment ring (10R) of said adjusting means (10),
catch lever (20) fixed in one piece to said housing (7, upper housing part 7o) of said adjusting means (10) with at least one tooth (20Z) engaging and complementing said external toothing of said adjustment ring (10R) over the entire limited lift height of the adjustment ring (10R), which by bending of the catch lever (20) can be manually disengaged from the external toothing.

13. An actuator according to claim 12,
**characterised by**
an outer ring (10A) of said adjustment ring (10R) with an outer diameter corresponding to the envelope circle of said external toothing (10RZ) of said adjustment collar (10R) of said adjusting device (10), being engageable by said tooth (34Z) of said catch lever (34) and being engaged and complementary to the aforementioned external toothing, enabling thereby a locking of said adjustment ring (10) of said adjusting means (10) against axial sliding, even with said upper part (18) being removed.

14. An actuator according to claim 11,
**characterised by**
a form-position coding (radius enlargement 22V / stepped profile 10ST) between said upper part (18) and said adjustment collar (10R), allowing the fixation of said upper part (18) on said housing (7) only in a certain definite relative position to the adjusting ring (10R) and limiting at the same time the possible angle of rotation of said adjustment ring (10R) relative to said upper part (18).

15. An actuator according to claims 1 or 8,
**characterised by**
- roller diaphragm (36) of a bistable diaphragm piston (35) being connected with said actuator means (16) and tensioned fully on the edge side between an upper housing part (7o) and a lower housing part (7u) with ribs (40) extending over its entire length.
- a pneumatic bipressure connection (39) positioned in a wall of said lower housing part (7u).

16. An actuator according to claim 15,
**characterised by**
disengageable connection of said actuator means (16) and said diaphragm piston (35), especially a clip or bayonet connection.

## Revendications

1. Dispositif de commande (4) à monter dans un composant (4) d'une carrosserie (2) d'un véhicule, comprenant :
- un carter (7) pourvu d'une ouverture de sortie (15),
- un organe d'actionnement (16) guidé dans le carter (7) et pouvant entrer et sortir en traversant l'ouverture de sortie (15),
- un support (3) pour la fixation du carter (7) sur la carrosserie (2),
- l'orifice de sortie (15) du carter fixé (7) étant soutenu sur le bord par un bord (14) d'une ouverture (11) de la carrosserie (2) pouvant également être traversée par l'organe d'actionnement (16),
- caractérisé en ce qu'il est prévu un dispositif de serrage (8), intervenant lors du déplacement du carter (7), appuyé d'un côté au moins indirectement contre le support (3) et guidé en translation dans un sens et dans l'autre par rapport à celui-ci dans la direction de mouvement de l'organe d'actionnement (16) le long d'un axe de translation, et à l'aide duquel un contour extérieur, dépassant de l'autre côté du carter (7), d'un bord (14) de l'ouverture de sortie (15) du carter (7) peut être serré contre un côté intérieur de l'ouverture (11) de la carrosserie (2).

2. Dispositif de commande selon la revendication 1, caractérisé par :
- un guidage non tournant (7T) du carter (7) dans le support (3o, 3S), au moyen d'une fente (3S), formée dans le support (3) et orientée parallèlement à l'axe de translation du carter (7), ainsi que d'un appendice (7T) du carter (7), pouvant être engagé dans la fente (3S) du support (3) et déplaçable par glissement dans celle-ci au moins sur une distance déterminée,
- un agencement irréversible (34, 34Z) du dispositif de serrage (8) pourvu d'un anneau de réglage (8R) monté de façon tournante.

3. Dispositif de commande selon la revendication 2, caractérisé par :
- un appui de l'anneau de réglage (8R), disposé entre le support (3, 3u) et le carter (7, 7u), du dispositif de serrage (8) dans le support (3, 3u), cet appui pouvant tourner autour de l'axe de translation du carter (7) et étant déplaçable en translation le long du même axe au moins d'une course limitée, le carter (7) étant soutenu d'un côté par le support (3) indirectement par l'intermédiaire de l'anneau de réglage (8R, disque 8S),
- au moins une paire de filets hélicoïdaux (8SL) complémentaires , situés l'un au-dessus de l'autre d'une part sur l'anneau de réglage (8R, 8S) et d'autre part sur le support (3, 3u), et qui glissent l'un sur l'autre lors d'une rotation de l'anneau de réglage (8R),
de telle sorte que :
- la course limitée corresponde au moins à la hauteur maximale de montée des filets hélicoïdaux (8SL) et
- le glissement l'un sur l'autre des filets hélicoïdaux complémentaires (8SL) produise la translation du carter (7) et de l'anneau de réglage (8R) par rapport au support (3) dans une direction qui est fonction du sens de rotation de l'anneau de réglage (8R).

4. Dispositif de commande selon la revendication 2, caractérisé par :
- une denture extérieure (8RZ) formée sur l'anneau de réglage (8R) du dispositif de serrage (8),
- un levier d'arrêt (34), formé d'une seule pièce avec le support (3, branche supérieure 3o) du dispositif de serrage (8), comportant au moins une dent (34Z), complémentaire de la denture extérieure (8RZ) , entrant en prise avec celle-ci sur toute la course limitée de l'anneau de réglage (8R) et qui peut être désaccouplée de la denture extérieure (8RZ) lors d'une flexion manuelle du levier d'arrêt (34).
- la denture extérieure (8RZ) de l'anneau de réglage (8R) conférant, en coopération avec la dent complémentaire (34Z), une irréversibilité au dispositif de serrage (8).

5. Dispositif de commande selon la revendication 3, caractérisé par :
- un système d'encliquetage (douille creuse 29, ergots d'encliquetage 30, douille creuse 32, ergots d'encliquetage 33) pour fixation, permettant la course limitée le long de l'axe de translation, de l'anneau de réglage (8R) du dispositif de serrage (8) et du carter (7) sur le support (3, 3u).

6. Dispositif de commande selon la revendication 1, caractérisé par :
- une partie supérieure (18) comportant l'ouverture de sortie (15) et pouvant être enlevée du carter (7) et
- un profil conique du contour extérieur du bord (14) l'ouverture de sortie (15).

7. Dispositif de commande selon la revendication 6, caractérisé en ce qu'il est prévu des crochets d'encliquetage (23) formés d'une seule pièce sur la partie supérieure (18), en ce que dans une partie supérieure (7o) du carter sont formés des évidements (26) dans lesquels les crochets d'encliquetage (23) peuvent être engagés, avec déformation élastique temporaire, pour bloquer de façon séparable la partie supérieure (18) avec le carter (7, 70) , cette partie supérieure (18) étant guidée de façon non tournante dans le carter (7) par les crochets d'encliquetage (23) engagés en position.

8. Dispositif de commande selon la revendication 6, dont l'organe de réglage comporte une extrémité libre pourvue d'un côté supérieur qui, dans la position d'engagement ou de repos de l'organe de réglage, assure une obturation dans la zone de l'ouverture en entrant, au moins approximativement, en coincidence avec le contour de la carrosserie,
caractérisé par :
- un dispositif irréversible d'ajustement (10) pour déplacer la partie supérieure (18), guidée de façon non tournante dans le carter (7, 7o), dans une translation de course limitée dans le sens de mouvement, mais cependant sans déplacement de l'organe d'actionnement (16) par rapport au carter (7),
- de sorte que, par déplacement de la partie supérieure (18) :
- la longueur totale du carter (7) est modifiable et
- la position relative du bord (14) de l'ouverture de sortie (15) du carter (7) est réglable par rapport à l'extrémité libre (17) de l'organe de réglage (16).

9. Dispositif de commande selon la revendication 8, caractérisé par :
- un codage forme-position (crochets d'encliquetage 23 /évidements 26 ; rainure 22 / nervure d'adaptation 25) entre la partie supérieure (18) et le carter (7), qui permet une fixation de la partie supérieure (18) sur le carter (7) seulement dans une position relative déterminée de façon univoque.

10. Dispositif de commande selon la revendication 8, caractérisé par :
- un anneau d'actionnement (10R) du dispositif de réglage (10), pouvant tourner sur le carter (7, partie supérieure de carter 7o) autour de l'axe de déplacement de l'organe d'actionnement (16) mais maintenu cependant sans possibilité de translation,
- au moins une paire de filets hélicoïdaux complémentaires (10SL) situés l'un au-dessus de l'autre sur l'anneau d'actionnement (10R, 10S) d'une part et sur la partie supérieure (18) d'autre part et qui glissent l'un sur l'autre lors de la rotation de l'anneau d'actionnement (10R),
- le glissement des filets hélicoïdaux complémentaires (10SL) l'un sur l'autre produisant la translation de la partie supérieure (18) par rapport au carter (7) dans une direction fonction du sens de rotation de l'anneau d'actionnement (10R).

11. Dispositif de commande selon la revendication 10, caractérisé en ce que l'anneau d'actionnement (10R) du dispositif de réglage (10) comporte un corps en forme de disque (10S), réalisé d'une seule pièce, pourvu d'un trou central (10L), sur lequel sont formés unitairement les filets hélicoïdaux (10SL), et qui est disposé dans un plan situé entre la partie supérieure (18) et le carter (7), et en ce que l'anneau d'actionnement (10R) du dispositif de réglage (10) est fixé sur la partie supérieure de carter (7o) au moyen des crochets d'encliquetage (23) de la partie supérieure (18) qui sont engagés dans le corps en forme de disque (10S).

12. Dispositif de commande selon la revendication 10, caractérisé par :
- une denture extérieure (10RZ) de l'anneau d'actionnement (10R) du dispositif de réglage (10),
- un levier d'arrêt (20), formé unitairement sur le carter (7, partie supérieure de carter 7o) du dispositif de réglage (10), comportant au moins une dent (20Z) complémentaire de la denture extérieure de l'anneau d'actionnement (10R), entrant en prise avec celle-ci sur toute la course limitée de l'anneau d'actionnement (10R) et qui peut être désaccouplée de la denture extérieure lors d'une flexion manuelle du levier d'arrêt (20).

13. Dispositif de commande selon la revendication 12, caractérisé par :
- une bague extérieure (10A) de l'anneau d'actionnement (10R), dont le diamètre extérieur correspond au cercle circonscrit de la denture extérieure (10RZ) de l'anneau d'actionnement (10R) du dispositif de réglage (10) et qui peut s'accrocher en arrière de la dent complémentaire (34Z), en prise avec la denture extérieure précitée, du levier d'arrêt (34), de telle sorte qu'un blocage de l'anneau d'actionnement (10R) du dispositif de réglage (10) empêchant sa translation axiale puisse être établi également quand la partie supérieure (18) est enlevée.

14. Dispositif de commande selon la revendication 11, caractérisé par un codage forme-position (augmentation de rayon 22V / contour étagé 10ST) entre la partie supérieure (18) et l'anneau d'actionnement (10R), qui permet une fixation de la partie supérieure (18) sur le carter (7) seulement dans une position relative, déterminée de façon univoque, par rapport à l'anneau d'actionnement (10R) et qui limite simultanément l'angle de rotation possible de l'anneau d'actionnement (10R) par rapport à la partie supérieure (18).

15. Dispositif de commande selon la revendication 1 ou 8, caractérisé par :
- une membrane enroulable (36) faisant partie d'un piston bistable (35) qui est relié à l'organe d'actionnement (16), cette membrane étant pourvue de nervures (40) s'étendant sur son pourtour et étant serrée sur le bord périphérique entre une partie supérieure de carter (7o) et une partie inférieure de carter (7u),
- un raccord pneumatique bipression (39) disposé dans une paroi de la partie inférieure de carter (7u).

16. Dispositif de commande selon la revendication 15, caractérisé par :
- une liaison séparable entre l'organe d'actionnement (16) et le piston à membrane (35), notamment une liaison d'encliquetage ou une liaison-baïonnette.
